# EUROPEAN PATENT APPLICATION

(11) **EP 4 207 076 A1**
(43) Date of publication of application: **05.07.2023**
(21) Application number: 22171630.1
(22) Date of filing: 04.05.2022
(51) Int. Cl.: G06T 11/00

(54) **MACHINE-LEARNING IMAGE PROCESSING INDEPENDENT OF RECONSTRUCTION FILTER**

(30) Priority: 29.12.2021 US 202163294501 P
(71) Applicant: Koninklijke Philips N.V., 5656 AG Eindhoven (NL)
(72) Inventor: WUELKER, Christian, Eindhoven (NL); BERGNER, Frank, Eindhoven (NL); KOEHLER, Thomas, Eindhoven (NL); GRASS, Michael, Eindhoven (NL)
(74) Representative: Philips Intellectual Property & Standards

(57) **Abstract**

A method is provided for processing images comprising retrieving measured data for a first image. The method then generates partially filtered data by applying a first filter to the measured data. The first filter is a generic filter. The method then reconstructs the partially filtered data to generate a partially filtered image. The method then generates a partially processed image by applying a first processing routine to the partially filtered image. The method then generates a filtered image by applying a second filter to the partially processed image, where the second filter is a filter selected from a plurality of potential secondary filters. The method then outputs the filtered image. Systems are provided for implementing the claimed method and training methods for neural networks used in the method are provided as well.

## Description

### FIELD OF THE INVENTION

The present disclosure generally relates to systems and methods for processing images using trained neural networks.

### BACKGROUND

Conventionally, obtaining images through standard imaging modalities, such as Computed Tomography (CT) scans, results in image artifacts and noise embedded into such images. Further, a system processing such images may seek to preemptively gain some information about the contents of the scan, such as an identification of the contents. Accordingly, images are generally filtered and reconstructed to initially convert measured data to images and are then processed using algorithms for, e.g., denoising, segmenting, or preemptively identifying contents.

Accordingly, images are typically retrieved as measured data and are reconstructed using reconstruction filters. Such filters may be used to promote certain image characteristics, such as sharpness or soft-tissue-contrast. As an example, when reconstructing a head image, a system may use a filter designed to promote soft tissue contrast in brain tissue, while a different filter may be used to reconstruct a body image. A filter used to reconstruct a body image, in contrast, may be sharper.

Reconstructed images will generally be noisy, and may contain various artifacts of the reconstruction process, and various denoising algorithms, among other algorithms, may then be applied to improve image quality. Such algorithms may be learning algorithms, such as Convolutional Neural Networks (CNNs). Accordingly, when using learning algorithms, such as CNNs for processing CT scans, different filters may have been used during image reconstruction to promote image features, such as sharpness, or to suppress different types of noise. Denoising of the reconstructed image should then be done in a way that preserves the image characteristics promoted by the filter used for reconstruction.

As such, learning algorithms, such as CNNs, may be trained for a specific type of anatomy and a specific reconstruction filter. Accordingly, the state of the art is to train different CNNs for different anatomical regions and reconstruction filters designed for such regions. This is especially beneficial if the filters are designed to yield very particular image characteristics in a certain anatomy, and it is a well understood goal to have image processing algorithms that are robust with respect to changes in the reconstruction settings such as those reflected in the filters.

Using different reconstruction filters leads to different image and noise characteristics of the reconstructed image. Accordingly, if a machine-learning algorithm was trained on a particular reconstruction filter, performance may be sub-optimal, or may break down entirely, on other reconstruction filters, as machine-learning methods generally are prone to overfit to the training data, and therefore often fail to generalize to parameter settings not sampled in training.

Accordingly, CNNs may require training for all parameter settings for potential reconstruction filters in order to achieve the best possible results. However, training and maintaining CNNs for a large number of reconstruction filter is time consuming and is typically not feasible.

There is a need for machine-learning algorithms and processes for CT image processing that can be made fully independent of a selected reconstruction filter.

### SUMMARY

Methods and systems are provided for machine learning based image processing that is independent of and agnostic of a reconstruction filter used during image processing.

A method is provided for processing images comprising retrieving measured data for a first image, where the measured data is either in a frequency domain or in a domain other than the frequency domain. Such a domain other than the frequency domain may be a spatial domain such as a projection domain or an image domain.

The method then generates partially filtered data by applying a first filter to the measured data. The first filter is a generic filter. The method then reconstructs the partially filtered data to generate a partially filtered image. The method then generates a partially processed image by applying a first processing routine to the partially filtered image.

The method then generates a filtered image by applying a second filter to the partially processed image, where the second filter is a filter selected from a plurality of potential secondary filters. The method then outputs the filtered image.

In some embodiments, the measured data is provided in a domain other than the frequency domain, and the method further comprises initially converting any measured data provided to the frequency domain. The generating of partially filtered data is then by applying the first filter to the measured data in the frequency domain, and reconstruction comprises converting the partially filtered data to an image domain.

In some such embodiments, the second filter is similarly applied in a frequency domain. As such, generating the filtered image then comprises extracting partially processed data from the partially processed image and converting the partially processed data to the frequency domain. The method then generates partially processed data by applying the second filter in the frequency domain.

The method then converts the filtered partially processed data to the image domain to generate the filtered image.

In some embodiments, the measured data comprises projection data for a CT image. In some such embodiments, the reconstruction of the partially filtered data is by back projecting the partially filtered data.

In some embodiments, the first processing routine is a first machine-learning algorithm trained on measured data filtered by applying the first filter but not the second filter. In some such embodiments, the first processing routine is a denoising routine, an image segmentation routine, or a diagnosis prediction routine.

In some embodiments, the first filter is a ramp filter.

In some embodiments, each of the plurality of potential secondary filters, if applied to the partially processed image, would generate different image and noise characteristics in a resulting filtered image. The filtered image resulting from the application of the second filter to the partially processed image is then different than a hypothetical filtered image resulting from the application of a different filter of the plurality of potential secondary filters.

In some such embodiments, for example, a first potential second filter is a soft reconstruction filter and a second potential second filter is a sharp reconstruction filter.
In some such embodiments, the second filter is selected from the plurality of potential secondary filters based on the body part or type of tissue represented in the first image.

In some embodiments, the method further comprises evaluating the partially processed image and outputting a result of the evaluation of the partially processed image prior to or with the filtered image.

In some embodiments, the method further comprises evaluating the partially processed image prior to generating the filtered image, and selecting the second filter for application based at least partially on the evaluation of the partially processed image.

In some such embodiments, the first processing routine is an image segmentation routine and the partially processed image is segmented into a plurality of segments, and different second filters selected from the plurality of potential secondary filters are applied to different segments of the plurality of segments

Also provided are imaging systems. Such a system may comprise a memory that stores a plurality of instructions, an imaging unit, a database that stores a plurality of potential secondary filters, and processing circuitry that couples to the memory and is configured to execute the instructions to perform a method such as that discussed above.

Also provided are methods for training a neural network model for use in an imaging processing system. The method includes retrieving sample measured data for an image of an object and retrieving a first target image associated with the sample image data for use as ground truth. The target image data may be retrieved later in the process as well.

The method then proceeds by generating partially filtered sample measured data by applying a first filter to the sample measured data, the first filter being a generic filter.

The method then reconstructs the partially filtered data to generate a partially filtered image.

The method then applies a first processing routine based on the neural network model being trained to the partially filtered image to generate a partially processed image and generates a first filtered image by applying a second filter to the partially processed image, the second filter being a filter selected from a plurality of potential secondary filters.

The method then evaluates the output of the processing routine by comparing the first filtered image to the first target image, the target image being associated with the second filter.

In some embodiments the first target image is one of a plurality of target images associated with the sample image data, and each of the plurality of target images are associated with different second filters of the plurality of potential secondary filters. In such embodiments, the method further comprises generating a second filtered image by applying an alternative second filter to the partially processed image, the alternative second filter selected from the plurality of potential secondary filters.

The method then evaluates the output of the processing routine further by comparing the second filtered image to an alternative target image associated with the alternative second filter.

Generally, the training method is repeated for sample measured data for a plurality of images and after each repetition of the method, the neural network model is modified based on the evaluation of the output of the processing routine.

### BRIEF DESCRIPTION OF THE DRAWINGS

Figure 1 is a schematic diagram of a system according to one embodiment of the present disclosure.
Figure 2 illustrates an exemplary imaging device according to one embodiment of the present disclosure.
Figure 3 shows a sample image reconstructed with a soft reconstruction filter.
Figure 4 shows the sample image of Figure 3 reconstructed with a sharp reconstruction filter.
Figure 5 illustrates the use of the Fourier slice theorem to transform projection data between the projection domain and the frequency domain tied to the image domain.
Figure 6 illustrates the conversion of raw data to the frequency domain.
Figure 7 illustrates a ramp filter for use in processing image data in the frequency domain.
Figure 8 illustrates the conversion of filtered data back to the projection domain.
Figure 9 illustrates a method for processing images in accordance with this disclosure.
Figure 10 illustrates a method for training a neural network model in accordance with this disclosure.

### DETAILED DESCRIPTION OF THE PREFERRED EMBODIMENTS

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

Generally, an image is reconstructed with a filter, and the filter is selected appropriate to the subject matter of the image being reconstructed. As such, when reconstructing a head image, a system may use a filter designed to promote soft tissue contrast in brain tissue. However, a different, and potentially sharper, filter may be used when reconstructing a body image. Similarly, different filters may suppress noise instead of, or in combination with, promoting image sharpness.

Further, in the context of Computed Tomography (CT) based medical imaging, for example, different image processors, such as machine-learning algorithms which may take the form of Convolutional Neural Networks (CNNs), may be used to process images. These image processors are then trained, in the case of machine learning algorithms, on corresponding different anatomical regions and structures in the context of appropriate reconstruction filters.

Because CNNs are trained in the context of specific reconstruction filters, such training is specific to the filters used during the training. Accordingly, for a CNN to be universally usable for processing filtered images, it would be trained independently on any filters that might be applied prior to such processing. In the embodiments described herein, reconstruction filters for a particular body part or set of desirable characteristics are split into two distinct reconstruction filters, namely a generic reconstruction filter and a targeted reconstruction filter for promoting desirable characteristics.

Accordingly, the systems and methods described herein initially apply a generic filter, or a generic portion of a filter, to measured data associated with an image. The image is then reconstructed using that generic filter to provide a partially filtered image as a generic reconstruction and the processing routine is applied to that partially filtered image. Only after desired processing routines are applied to the partially filtered image is a second targeted reconstruction filter applied to the partially processed image. The targeted reconstruction filter is then one of a plurality of potential secondary filters used, for example, to promote desirable characteristics.

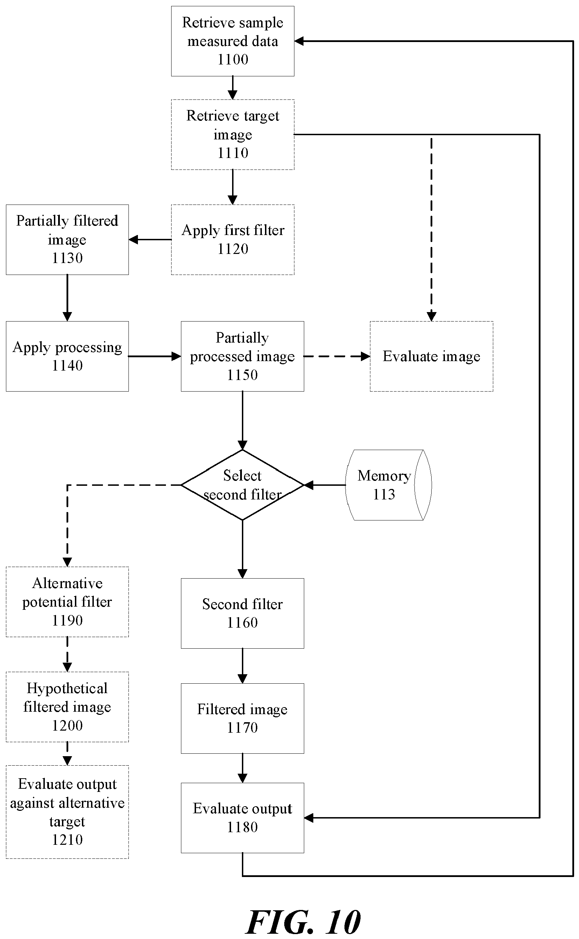

The processing routine may then be a machine learning algorithm, such as a CNN, trained on data filtered with the generic filter and associated ground truth data used for training may be data filtered only with the generic filter. Alternatively, as discussed below with respect to Figure 10, the CNN may be trained on fully filtered images used as ground truth, and the training method may then apply the targeted reconstruction filter after applying the processing routine and prior to evaluating the results of the filtering. In any event, the machine-learning algorithm may be universally usable because it is trained and applied prior to the use of a specific targeted reconstruction filter.

In medical imaging other than CT, such as Magnetic Resonance Imaging (MRI) or Positron Emission Tomography (PET), different methods may be used for reconstruction to recreate and process images. Accordingly, different reconstruction algorithms may be used depending on the type of scan or data acquisition, as well as on the desired image characteristics for a particular scan. The reconstruction algorithm may then be adjusted using filters to yield certain image characteristics. In this disclosure, embodiments are discussed in terms of CT imaging. However, it will be understood that the methods and systems described herein may be used in the context of other imaging that rely on filtration for reconstruction as well.

In some embodiments a person skilled in the art might use other techniques to alter the frequency content of data in the image or raw data domain beside Fourier analysis or convolutions. Such techniques could be, but would not be limited to, Wavelet analysis, multi-scale analysis like Laplacian pyramid decompositions, and other transforms like discrete cosine-transforms. It will be understood that the discussion of filtering herein typically includes such processing techniques, so long as they can be divided into a first generic processing technique and a second targeted processing technique.

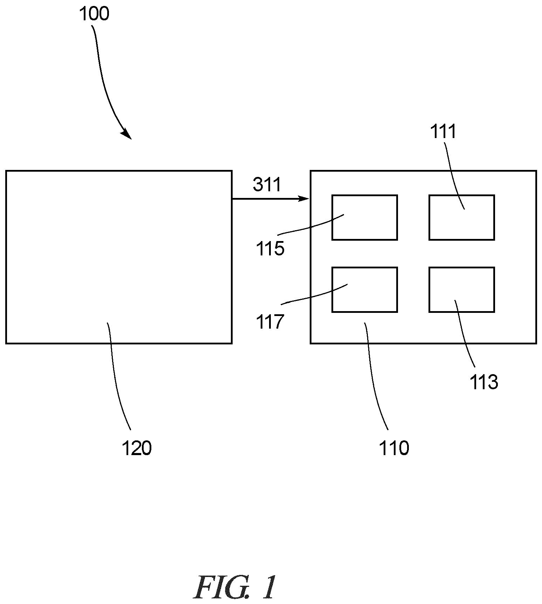

Figure 1 is a schematic diagram of a system 100 according to one embodiment of the present disclosure. As shown, the system 100 typically includes a processing device 110 and an imaging device 120.

The processing device 110 may apply processing routines to images or measured data, such as projection data, received from the image device 120. The processing device 110 may include a memory 113 and processor circuitry 111. The memory 113 may store a plurality of instructions. The processor circuitry 111 may couple to the memory 113 and may be configured to execute the instructions. The instructions stored in the memory 113 may comprise processing routines, as well as data associated with processing routines, such as machine learning algorithms, and various filters for processing images. While all data is described as being stored in the memory 113, it will be understood that in some embodiments, some data, such as potential filters for use in processing measured data associated with images, may be stored in a database, which may itself either be stored in the memory or stored in a discrete system.

The processing device 110 may further include an input 115 and an output 117. The input 115 may receive information, such as images or measured data, from the imaging device 120. The output 117 may output information, such as filtered images, to a user or a user interface device. The output may include a monitor or display.

In some embodiments, the processing device 110 may relate to the imaging device 120 directly. In alternate embodiments, the processing device 110 may be distinct from the imaging device 120, such that it receives images or measured data for processing by way of a network or other interface at the input 115.

In some embodiments, the imaging device 120 may include an image data processing device, and a spectral or conventional CT scanning unit for generating the CT projection data when scanning an object (e.g., a patient).

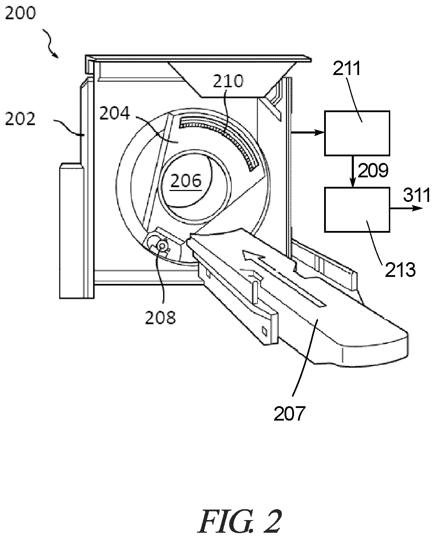

Figure 2 illustrates an exemplary imaging device 200 according to one embodiment of the present disclosure. It will be understood that while a CT imaging device is shown, and the following discussion is in the context of CT images, similar methods may be applied in the context of other imaging devices, and images to which these methods may be applied may be acquired in a wide variety of ways.

In an imaging device in accordance with embodiments of the present disclosure, the CT scanning unit may be adapted for performing multiple axial scans and/or a helical scan of an object in order to generate the CT projection data. In an imaging device in accordance with embodiments of the present disclosure, the CT scanning unit may comprise an energy-resolving photon counting image detector. The CT scanning unit may include a radiation source that emits radiation for traversing the object when acquiring the projection data.

In the example shown in Figure 2, the CT scanning unit 200, e.g. the Computed Tomography (CT) scanner, may include a stationary gantry 202 and a rotating gantry 204, which may be rotatably supported by the stationary gantry 202. The rotating gantry 204 may rotate about a longitudinal axis around an examination region 206 for the object when acquiring the projection data. The CT scanning unit 200 may include a support 207 to support the patient in the examination region 206 and configured to pass the patient through the examination region during the imaging process.

The CT scanning unit 200 may include a radiation source 208, such as an X-ray tube, which may be supported by and configured to rotate with the rotating gantry 204. The radiation source 208 may include an anode and a cathode. A source voltage applied across the anode and the cathode may accelerate electrons from the cathode to the anode. The electron flow may provide a current flow from the cathode to the anode, such as to produce radiation for traversing the examination region 206.

The CT scanning unit 200 may comprise a detector 210. The detector 210 may subtend an angular arc opposite the examination region 206 relative to the radiation source 208. The detector 210 may include a one- or two-dimensional array of pixels, such as direct conversion detector pixels. The detector 210 may be adapted for detecting radiation traversing the examination region 206 and for generating a signal indicative of an energy thereof.

The CT scanning unit 200 may further include generators 211 and 213. The generator 211 may generate tomographic projection data 209 based on the signal from the detector 210. The generator 213 may receive the tomographic projection data 209 and, in some embodiments, generate a raw image 311 of the object based on the tomographic projection data 209. In some embodiments, the tomographic projection data 209 may be provided the input 115 of the processing device 110, while in other embodiments the raw image 311 is provided to the input of the processing device.

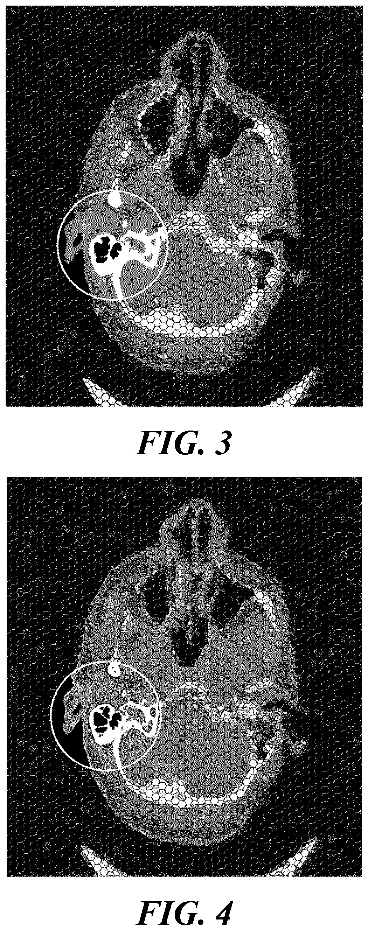

Figures 3 and 4 show an identical image processed with two distinct filters resulting in different processed images. Measured data corresponding to an image, such as projection data 209 or a raw image 311, is typically received at the input 115 of the processing device 110. The projection data 209 or raw image 311 is then processed to reconstruct the image and improve the image quality. The processing of images in the embodiments discussed herein include filtering the measured data in the form of the projection data 209 or raw image 311 with a generic filter, implementing a processing routine, and again filtering the image by applying a second targeted filter. The processing routine includes implementing the machine-learning algorithm, such as a Convolutional Neural Network (CNN).

The second filter is typically a targeted reconstruction filter designed for a particular anatomical region, such as a head or body filter, or for a specific type of tissue, such as bone or soft tissue. A head filter may be specifically designed to promote soft tissue contrast in brain tissue, while a body filter may instead be designed to provide sharper results. As shown, Figure 3 shows a transversal section through a head, with the image reconstructed using a soft reconstruction filter. Figure 4 shows the same transversal section with the image reconstructed using a sharp reconstruction filter.

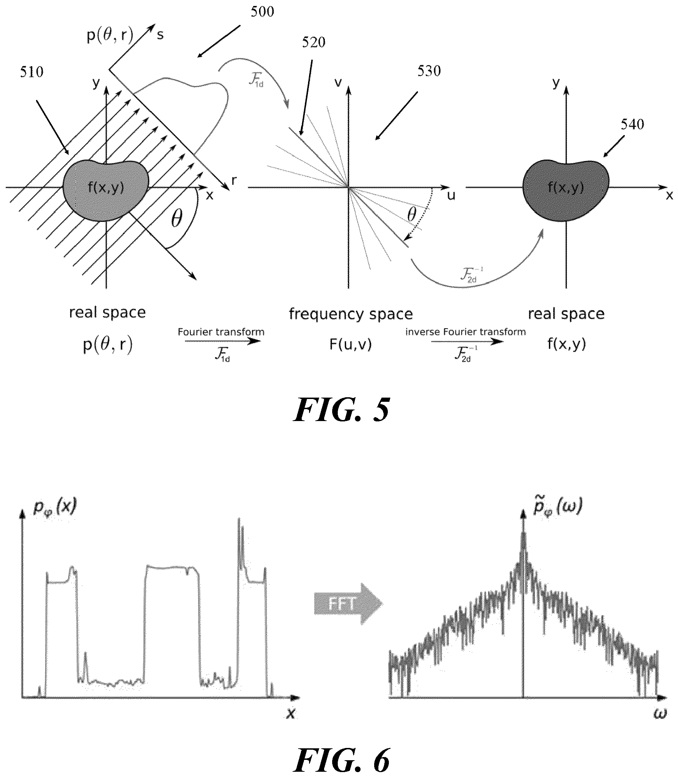

Figure 5 illustrates the use of the Fourier slice theorem to transform projection data between the projection domain and the frequency domain tied to the image domain. As shown, the two-dimensional Fourier spectrum of an image can be obtained by inserting one dimensional Fourier transforms of filtered signal profiles as lines passing through the spectrum origin with the respective angle θ under which the corresponding profile was acquired.

It is noted that in the discussion that follows, reference is made to the spatial domain, as well as to the image domain, the projection domain, and the frequency domain. The spatial domain is referenced in contrast with the frequency domain, but that both the projection domain and the image domain are spatial domains. Accordingly, where a spatial domain is referenced generically, it is understood that such a domain could be either the projection domain, the image domain, or any of a number of different spatial domains, depending on the type of image and the stage of processing being considered.

Accordingly, the image for a CT is initially recorded as a set of projections 500 in the sinogram or projection domain, each taken at an angle θ and corresponding to the function p(θ, r). Where the image of the object 510 being processed is in two dimensions, as shown, then each projection 500 is transformed by a one-dimensional Fourier transform into the frequency space, resulting in a single line passing through the origin at the angle theta 520. Once the two-dimensional Fourier transform of the object 530 is built up in the frequency space by multiple projections taken at different angles, the object can then be recreated 540 in real space, such as in the image domain, by applying a two-dimensional inverse Fourier transform.

While the example shown is two-dimensional image processed as one-dimensional lines, it is understood that the same approach works in higher dimensions as well. Accordingly, where a three-dimensional image is being processed, the filtering would be on two-dimensional planes passing through the origin of the three-dimensional frequency space at the acquisition angle of the projection view.

While the object 510 is represented in the frequency space, filters can be applied by multiplying the two-dimensional image spectrum 530 with a rotationally symmetric two-dimensional filter spectrum. Accordingly, the reconstruction filter can be applied in the frequency domain prior to reconstructing the object representation in a spatial domain.

Because the application of filters in the frequency domain involves multiplication, filters can be divided into components. Accordingly, certain components of a filter may be generic across a type of imaging, while other components of a filter are specific to characteristics that the filter seeks to emphasize or suppress in a particular image or class of images.

Accordingly, in the embodiment shown involving CT imaging, the measured data may be projection data 500. Because of the nature of the Fourier slice theorem, the transformation of this data into the frequency space results in lines passing through the origin at different angles Theta. While an infinite number of projections can be taken, any representation in the frequency domain will be overrepresented near the origin and underrepresented farther from the origin. Accordingly, higher frequencies will be oversampled and lower frequencies will be under sampled. To adjust for this, a generic filter may be applied to all CT data, such as in the form of a ramp filter.

In practice, after returning the image spectrum 530 in the frequency domain to a spatial domain, such as by applying an inverse Fast Fourier Transform (iFFT) to the lines of the spectrum which may then be "back-projected" into the image space. This would be equivalent to implementing a 2 dimensional inverse Fourier transform, as indicated in Figure 5. However, because lower frequencies are under sampled, such a back projection would be blurred. In order to sharpen the image, the frequency data may be multiplied by a ramp filter prior to reverting the data to the spatial domain and back-projecting. This process results in a sharper image and is referred to as "filtered back-projection" or FBP.

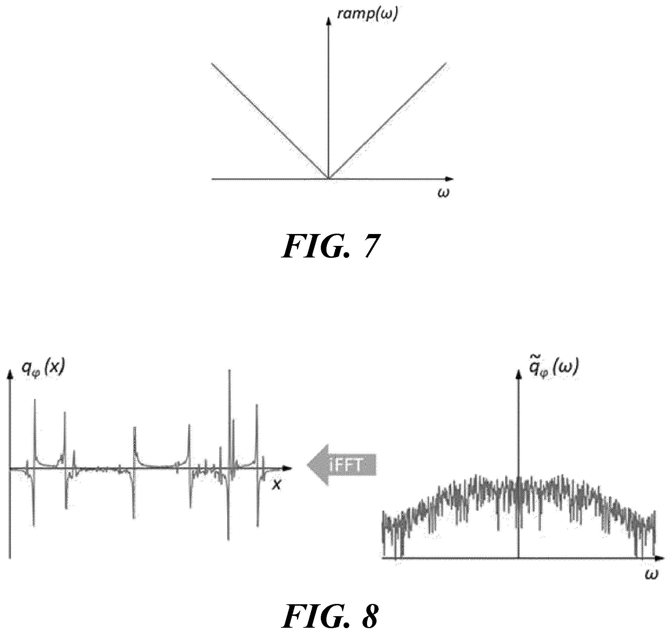

Components of the filter specific to characteristics that the filter seeks to emphasize or suppress may then be divided out of the reconstruction filter as a different second filter that can be applied discretely. This approach may result in separate generic filters, such as the ramp filter shown in Figure 7, and a targeted second filter. Such a second filter can be applied in the frequency domain, by converting the data corresponding to the image to the frequency domain, multiplying the frequency data by the second filter, and then returning the data to the image domain. Alternatively, the second filter can be applied in the spatial domain by applying a convolution of a filter kernel independently of the generic filter.

This second filter is therefore a targeted filter that is not generic, and it may be a Modulation Transfer Function (MTF). While a Modulation Transfer Function is typical in the context of CT imaging, it will be understood that different types of filters or secondary processing routines may be applied in other imaging modalities.

Because a convolution in the image or spatial domain is equivalent to multiplication in the frequency domain, filter application may be less resource intensive in the frequency domain than in the image domain. There may therefore be a benefit in processing speed or power requirements to converting the data to the frequency domain to apply the filter.

Figure 6 illustrates the conversion of raw data to the frequency domain. Figure 7 illustrates a ramp filter for use in processing image data in the frequency domain. In the spatial domain, such as the projection domain, each projection p_{ϕ}(x) may be considered as a function of X. By converting the measured data to the frequency domain, such as by applying a Fast Fourier Transform (FFT) each projection p̃_{ϕ}(ω) can be considered as a function of ω. This allows for the application of filters in the frequency domain by multiplication.

As shown in Figure 6, higher frequencies ω are suppressed when converting the measured data into the frequency domain. To correct for this, or any other artifacts consistent across a set of measured data, a generic filter, such as the ramp filter shown in Figure 7, can be applied to the data in the frequency domain. Accordingly, in the case of CT data, for example, where under sampling of higher frequencies are a known issue due to the method of data acquisition, an initial generic filter can be applied.

Figure 8 illustrates the conversion of filtered data q̃_{ϕ}(x) in the frequency domain to the spatial domain. As shown, after filtering, the filtered data q̃_{ϕ}(x) is no longer artificially suppressed at higher frequencies. Accordingly, an inverse FFT can be applied to return the data to the spatial domain. In the case of a CT scan, the resulting data q_{ϕ}(x) remains in the projection domain and can then be back-projected into the image domain to build up an image 540 associated with the data being processed as shown in Figure 5.

Because the reconstruction filter can be separated into a generic first filter and a targeted second filter, and because the filters can be combined by simple multiplication in the frequency domain, the image can first be filtered with the first filter and reconstructed and can then be separately filtered with the second filter and reconstructed. The image can then be partially filtered and reconstructed based on the first filter and then processed using a machine-learning algorithm. The image can then be further filtered with the targeted part of the filter, or the MTF.

Because the machine-learning algorithm is applied before the second filter, which includes the targeted part of the filter or the MTF, the machine-learning algorithm is agnostic of the second reconstruction filter. As such, a single machine-learning algorithm can be trained in order to support a large set of different second filters.

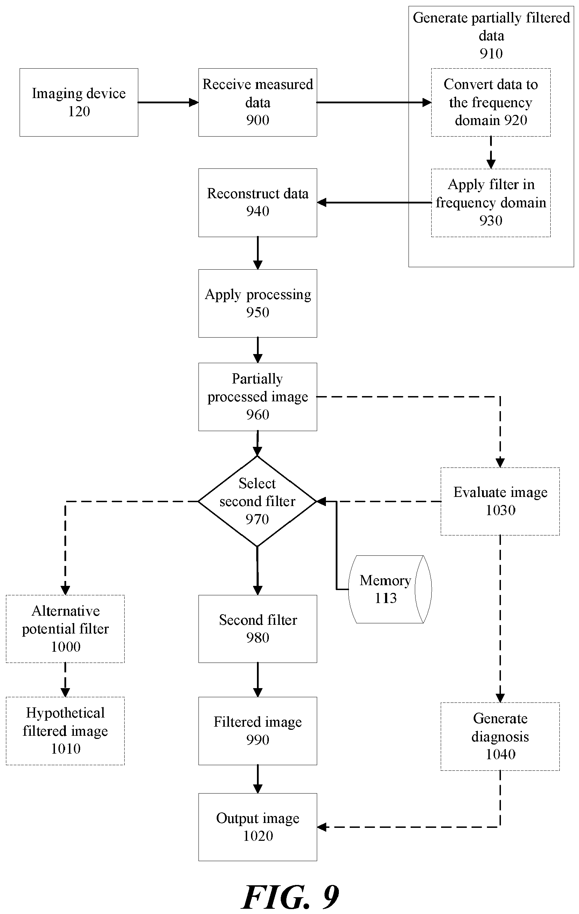

Figure 9 illustrates a method for processing images in accordance with this disclosure.

As shown, and as discussed above, the processing device 110 may first receive (900) measured data, such as raw CT data 209, for a first image from the imaging device 120 at an input 115. The measured data may be in the frequency domain, or it may be in some domain other than the frequency domain. For example, in the case of CT data, the measured data may be provided in a spatial raw data domain, such in the sinogram or projection domain. Raw data for other types of imaging, such as an MRI, may be provided in the frequency domain. Alternatively, the measured data received may be previously processed into an image domain as a raw image 311.

In any event, once the measured data is received by the processing device 110 (at 900), the processing device may proceed by generating partially filtered data (910) by applying a first filter to the measured data. The first filter is a generic filter applicable to data corresponding to any image of a group of images being processed by the method. For example, the first filter may be a ramp filter, applicable to any CT image being processed, regardless of what body type or type of tissue appears in the first image. In this context, a "generic" filter is a filter usable on data for a relatively broad set of images and in a broad set of contexts. For example, a generic filter may be applicable to all images drawn from a specific source or taken by way of a specific imaging modality. In contrast, a targeted filter, such as the second filter discussed below, may be specific to a narrower group of images, such as images related to a specific body part or tissue type.

In some embodiments, the generation of partially filtered data is by optionally initially converting any measured data to the frequency domain (920) if in a domain other than the frequency domain. This may be, for example, by applying an FFT, as shown in Figure 6, if the measured data is initially provided in a spatial domain, such as the projection or image domain. The first filter is then applied (930) to the measured data in the frequency domain to generate partially filtered data, as shown in Figure 8. Where the first filter is applied in the frequency domain, it may be applied as a simple multiplication. If the first filter is instead applied in a spatial domain, the application may take the form of a convolution of an image with a corresponding filter kernel.

After filtering the measured data to generate partially filtered data, the partially filtered data is reconstructed (940) to generate a partially filtered image. Where the first filter was applied in the frequency domain, such reconstruction comprises converting the partially filtered data to the image domain. This may be implemented using techniques such as filtered back-projection using the first filter, as discussed above with respect to Figure 5.

A processing routine is then applied (950) to the reconstructed partially filtered image to generate a partially processed image (960). Such a processing routine is typically a machine-learning algorithm, such as a convolutional neural network, that has been trained on measured data filtered by applying the first filter, but not the second filter. Such a processing routine may be, for example, a denoising routine, an image segmentation routine, or a diagnosis prediction routine.

A second filter is then selected for application to the image (970) from a plurality of potential secondary filters. The partially processed image is then filtered with the second filter (980) to generate a filtered image (990). The second filter is typically a targeted reconstruction filter designed for a particular anatomical region, or for a specific type of tissue. In some embodiments, the second filter is a Modulation Transfer Function (MTF). The plurality of second filters may be stored in a database which may be provided in the system memory 113. Alternatively, a database of potential second filters may be provided independently of the system. In some embodiments, the second filters may be designed by a third-party vendor, for example, and may therefore be a standalone database.

Accordingly, unlike the first filter, the second filter is not a generic filter, and different filters from the plurality of potential secondary filters, if applied to the partially processed image, would generate different image and noise characteristics in a resulting filtered image. As such, the filtered image (990) resulting from the application of the second filter (at 980) to the partially processed image is different than a hypothetical filtered image (1010) resulting from the application of a different filter (1000) of the plurality of potential secondary filters.

In some embodiments, for example, one potential second filter (980) of the plurality of potential secondary filters may be a soft reconstruction filter, resulting in a filtered image (990) similar to that shown in Figure 3 while an alternative potential second filter (1000) may be a sharp reconstruction filter resulting in a filtered image (1010) similar to that shown in Figure 4. The second filter used in reconstruction may be selected based on the body part or type of tissue represented in the first image.

In some embodiments, the generation of the filtered image (at 990) is by first extracting partially processed data from the partially processed image and converting the partially processed data to the frequency domain. In such an embodiment, filtered partially processed data may be generated by applying the second filter in the frequency domain. After applying the second filter, the filtered partially processed data (at 960) is converted to the image domain to generate the filtered image.

Alternatively, in some embodiments, the generation of the filtered image (at 990) is by processing in the image domain. Such a filter may be applied as a convolution of the partially processed image with a filter kernel.

Once the filtered image (990) is generated, it may be output (1020) to a user of the system. This may be by way of the system output 117 and may be by way of a display, for example.

It will be understood that although the methods described herein are described in the context of CT scan images or raw data, various imaging technology, including various medical imaging technologies are contemplated, and images generated using a wide variety of imaging technologies can be effectively processed using the methods described herein.

In some embodiments, the learning algorithm applied as a processing routine (at 950) may be utilized to provide insight to a user independently of or in combination with the resulting image. Accordingly, the partially processed image (at 960) may be evaluated (at 1030) prior to generation of the filtered image (at 990). For example, if the processing routine is a diagnosis prediction routine, the partially processed image (960) may be evaluated (1030) and a result may be output as a diagnosis (1040) and can be provided to a user either prior to or with the filtered image (at 1020).

In some such embodiments, instead of outputting the result of the evaluation (1030) as a diagnosis (1040), the results of the evaluation may instead be used in the context of the method for processing images. As such, the evaluation (1030) may be used to inform the selection of the second filter (at 970), such that the second filter to be applied is based at least partially on the evaluation of the partially processed image. For example, where the processing routine (950) is an image segmentation routine, the routine may identify a segment of the image containing a specific body part, and the identified segment may then be filtered with a second filter associated with that body part.

In some such embodiments where the processing routine (950) is an image segmentation routine, the partially processed image is segmented into a plurality of segments as part of the evaluation (1030) of the image. In such an embodiment, different second filters (980, 1000) selected from the plurality of potential secondary filters may be applied to different segments of the plurality of segments.

Figure 10 illustrates a method for training a learning algorithm, such as a neural network model. The method includes first providing or retrieving (1100) sample measured data for an image of an object. During the training process, the method also retrieves at least a first target image (1110) associated with the sample image data for use as ground truth. Accordingly, when training the method, the learning algorithm is a processing method that is applied to the sample measured data during the course of the training with a goal of approximating the first target image (1110).

It is noted that in the discussion herein, the method retrieves both the sample measured data (at 1100) and the target image (at 1110) at the beginning of the process. Such data and images may be provided as matched sets for training purposes. Alternatively, the target image may be provided later after the second filter is selected such that the target image is tailored to the second filter actually used (at 1160).

The method then generates a partially filtered sample image (at 1130) from the measured data by applying a first filter (1120) to the sample measured data, where the first filter is a generic filter. As discussed above with respect to Figure 9, this filtering may be in a spatial raw data domain, the frequency domain, or an alternative spatial domain, among others.

After initially filtering the data (at 1120) by applying the first filter, the method reconstructs the partially filtered data to generate a partially filtered image (1130). The method then applies a first processing routine to the partially filtered image (at 1140), with the first processing routine being based on the neural network model being trained. The application of the first processing routine to the partially filtered image generates a partially processed image (at 1150).

In some embodiments, the first target image (1110) corresponds to ground truth data filtered only by the first filter (1120). In such an embodiment, the partially processed image (1150) is then compared to the first target image (1110) in order to evaluate the partially processed image and tune the learning algorithm.

Alternatively, in some embodiments, instead of evaluating the partially processed image (1150), the partially processed image is then filtered with a second filter (1160), the second filter being a filter selected from a plurality of potential secondary filters. As discussed above with respect to Figure 9, the second filter may have been drawn from a database which may have been stored in a memory 113 containing a plurality of potential secondary filters. The output of the second filter (1160) is then a filtered image (1170).

In such an embodiment, the first target image (1110) corresponds to ground truth data filtered by the first filter (1120) and further filtered by the second filter 1160 utilized for filtering the training data. Accordingly, the output of the processing routine (at 1140) is then evaluated (at 1180) by comparing the filtered image (1170) to the first target image (1110).

The result of such an evaluation may then be used to tune the learning algorithm, and such training may then be repeated for a large set of training data.

In some embodiments, the first target image (1110) is one of a plurality of target images associated with the sample image data, and each of the plurality of target images are associated with different second filters (1160, 1190) of the plurality of potential secondary filters.

In such an embodiment, the method may further train the learning algorithm by applying an alternative potential filter (1190) to the partially processed image, where the alternative second filter is selected from the plurality of potential secondary filters. This would then generate a second filtered image (1200).

The output of the processing routine may then be further evaluated (1210) by retrieving an alternative target image associated with the alternative second filter and comparing the second filtered image (1200) to the alternative target image.

In any such training routine, after evaluating the output of the routine, the process is repeated for sample measured data for a plurality of images. As such, the method retrieves additional sample measured data (1100) and performs the method repeatedly. For each repetition of the method, the neural network model is modified based on the evaluation of the output of the processing routine.

The methods according to the present disclosure may be implemented on a computer as a computer implemented method, or in dedicated hardware, or in a combination of both. Executable code for a method according to the present disclosure may be stored on a computer program product. Examples of computer program products include memory devices, optical storage devices, integrated circuits, servers, online software, etc. Preferably, the computer program product may include non-transitory program code stored on a computer readable medium for performing a method according to the present disclosure when said program product is executed on a computer. In an embodiment, the computer program may include computer program code adapted to perform all the steps of a method according to the present disclosure when the computer program is run on a computer. The computer program may be embodied on a computer readable medium.

While the present disclosure has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the disclosure.

All examples and conditional language recited herein are intended for pedagogical purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

## Claims

1. A method for processing images comprising:
retrieving measured data for a first image, the measured data being in a frequency domain or in a domain other than the frequency domain;
generating partially filtered data by applying a first filter to the measured data, the first filter being a generic filter;
reconstructing the partially filtered data to generate a partially filtered image;
generating a partially processed image by applying a first processing routine to the partially filtered image;
generating a filtered image by applying a second filter to the partially processed image, the second filter being a filter selected from a plurality of potential secondary filters; and
outputting the filtered image.

2. The method of claim 1, wherein the method further comprises initially converting any measured data provided to the frequency domain if in the domain other than the frequency domain, wherein the generating of partially filtered data is by applying the first filter to the measured data in the frequency domain, and wherein reconstruction comprises converting the partially filtered data to an image domain.

3. The method of claim 2, wherein generating the filtered image comprises:
extracting partially processed data from the partially processed image and converting the partially processed data to the frequency domain;
generating filtered partially processed data by applying the second filter in the frequency domain;
converting the filtered partially processed data to the image domain to generate the filtered image.

4. The method of claim 1, wherein the measured data comprises projection data for a CT image.

5. The method of claim 4 wherein the reconstruction of the partially filtered data is by back-projecting the partially filtered data.

6. The method of claim 1 wherein the first processing routine is a first machine-learning algorithm trained on measured data filtered by applying the first filter but not the second filter.

7. The method of claim 6 wherein the first processing routine is a denoising routine, an image segmentation routine, or a diagnosis prediction routine.

8. The method of claim 1 wherein each of the plurality of potential secondary filters, if applied to the partially processed image, would generate different image and noise characteristics in a resulting filtered image, and wherein the filtered image resulting from the application of the second filter to the partially processed image is different than a hypothetical filtered image resulting from the application of a different filter of the plurality of potential secondary filters.

9. The method of claim 8 wherein a first of the potential second filters is a soft reconstruction filter and a second of the potential second filters is a sharp reconstruction filter.

10. The method of claim 9 wherein the second filter is selected from the plurality of potential secondary filters based on the body part or type of tissue represented in the first image.

11. An imaging system comprising:
a memory that stores a plurality of instructions;
an imaging unit;
a database that stores a plurality of potential secondary filters; and
processing circuitry that couples to the memory and is configured to execute the instructions to:
obtain measured data from the imaging unit, the measured data being in a frequency domain or in a domain other than the frequency domain;
generate partially filtered data by applying a first filter to the measured data, the first filter being a generic filter;
reconstruct the partially filtered data to generate a partially filtered image;
generate a partially processed image by applying a first processing routine to the partially filtered image;
retrieve a second filter from the database, the second filter being selected from the plurality of potential secondary filters;
generate a filtered image by applying the second filter to the partially processed image; and
output the filtered image.

12. The imaging system of claim 11, wherein the processing circuitry initially converts any measured data obtained in the domain other than the frequency domain to the frequency domain and converts the partially filtered data to an image domain during reconstruction, wherein the generating of partially filtered image data is by applying the first filter to the image data in the frequency domain, and wherein the reconstruction of the partially filtered image data is by back-projecting the partially filtered data.

13. The imaging system of claim 11, wherein the first processing routine is a first machine-learning algorithm trained on measured data filtered by applying the first filter but not the second filter.

14. A method for training a neural network model comprising:
retrieving sample measured data for an image of an object;
retrieving a first target image associated with the sample image data for use as ground truth;
generating partially filtered sample measured data by applying a first filter to the sample measured data, the first filter being a generic filter;
reconstructing the partially filtered data to generate a partially filtered image;
applying a first processing routine based on the neural network model being trained to the partially filtered image to generate a partially processed image;
generating a first filtered image by applying a second filter to the partially processed image, the second filter being a filter selected from a plurality of potential secondary filters; and
evaluating the output of the processing routine by comparing the first filtered image to the first target image, the target image being associated with the second filter.

15. The method of claim 14, wherein the first target image is one of a plurality of target images associated with the sample image data, and where each of the plurality of target images are associated with different second filters of the plurality of potential secondary filters, and wherein the method further comprises:
generating a second filtered image by applying an alternative second filter to the partially processed image, the alternative second filter selected from the plurality of potential secondary filters, and
evaluating the output of the processing routine further by comparing the second filtered image to an alternative target image associated with the alternative second filter.
